# EUROPÄISCHE PATENTSCHRIFT

(11) **EP 2 101 215 B1**
(45) Veröffentlichungstag und Bekanntmachung des Hinweises auf die Patenterteilung: **16.04.2014**
(21) Anmeldenummer: 09003417.4
(22) Anmeldetag: 09.03.2009
(51) Int. Cl.: G03B 15/05, H04N 5/225

(54) **Koaxiale Auflichtbeleuchtung**
Coaxial reflected light illumination
Eclairage par lumière incidente coaxiale

(30) Priorität: 11.03.2008 DE 102008013722
(43) Veröffentlichungstag der Anmeldung: 16.09.2009
(73) Patentinhaber: Vision & Control GmbH, 98527 Suhl (DE)
(72) Erfinder: Geffe, Jürgen Dr., 99438 Bad Berka (DE); Piske, Claudius, 98529 Suhl (DE)
(74) Vertreter: Liedtke, Klaus

(56) Entgegenhaltungen:
- WO-A-2007/085599
- DE-U1- 20 205 714
- US-A1- 2005 137 459
- US-A1- 2006 139 640
- US-A1- 2008 055 897

## Beschreibung

Die Erfindung betrifft eine koaxiale Auflichtbeleuchtung gemäß dem Oberbegriff des Anspruchs 1.

Die Erfindung ist vorzugsweise für Anwendungen einsetzbar, die einen geringen Platzbedarf erfordern. Darüber hinaus bietet die Auflichtbeleuchtung die Möglichkeit zur Raumfrequenzfilterung.

Im Stand der Technik sind verschiedene Methoden bekannt, um koaxiale Auflichtbeleuchtungen zu realisieren.

Aus DE 202 05 714 U1 ist eine Ringleuchte für elektronische Kameras bekannt, bei der auf einer LED-Leiterplatte in mehreren konzentrischen Ringen Lichtemitterdioden (LEDs) angeordnet sind. Eine gleichmäßige Ausleuchtung des Objektfeldes ist damit nicht möglich.

Zur gleichmäßigen Ausleuchtung wurde versucht durch optische Strahlenteilung einen Beleuchtungsstrahlengang in den Abbildungsstrahlengang einzublenden.

In einer Produktinformation der Stemmer GmbH wird eine als Volpi CIS bezeichnete Anordnung beschrieben, bei der koaxiale Auflichtbeleuchtungen durch Vorsatzsysteme auf der Grundlage halbdurchlässiger Schichten vor dem Objektiv verwendet werden.

Ferner ist eine Anordnung aus einer Produktinformation der Firma V.S.Technonoly bekannt, die mit VS-TC series bezeichnet wird. Hierbei erfolgt eine koaxiale Einspiegelung des Lichtes über Teilerwürfel mit halbdurchlässigen Schichten im Objektiv.
In US 2008/055897 A1 ist eine koaxiale Auflichtbeleuchtung beschrieben, bei der Licht einer Beleuchtungseinrichtung auf ein abzubildendes Objekt gerichtet wird. Das von der Beleuchtungseinrichtung ausgeleuchtete Objekt wird mit einem Objektiv auf einen Bildaufnehmer projiziert, wobei in der Nähe des Objektivs ein leuchtendes Element angeordnet ist, welches teilweise lichtdurchlässig ist und eine Mehrzahl von Lichtemitterdioden enthält. Das Licht wird hierbei außerhalb des Abbildungsstrahlengangs erzeugt und muss mittels teildurchlässiger Spiegel umgelenkt und seitlich eingestrahlt werden. Nachteilig ist dabei, dass nur ein geringer Teil des erzeugten Lichts in das Objektiv gelangen kann und die Anordnung einen großen Platzbedarf erfordert.

Diese Systeme arbeiten auf der Basis von halbdurchlässigen Schichten. Nachteilig ist dabei, dass 50 % des eingestrahlten Lichtes beim Einkoppeln verloren geht. Der nicht genutzte Lichtanteil muss durch komplizierte Strahlenfallen aufgefangen werden. Ferner wird störendes Streulicht erzeugt, sodass weniger als 50 % des eingestrahlten Lichtes die Objektszene erreicht.
Das vom Objekt zurück treffende Licht wird wiederum um 50 % halbiert, so dass im besten Falle 25 % des erzeugten Lichtes ins Objektiv gelangen können.
Außerdem benötigen die bekannten koaxialen Einspiegelungen einen großen Bauraum, der vor dem Objektiv zu Lasten des freien Arbeitsabstandes geht. Oft kommt hier eine halbdurchlässige planparallele Platte zum Einsatz, die um 45° zur optischen Achse gekippt ist. Diese Anordnung verschlechtert die Bildgüte zusätzlich durch Astigmatismus.

Bei Anordnungen im Objektiv werden meist Teilerwürfel eingesetzt, deren Astigmatismusfreiheit durch einen erheblichen Bauteilpreis erkauft werden muss.

Ferner ist aus US 2005/0233125 A1 ein aus mehren Schichten bestehender Glasblock bekannt, der neben verschiedenen elektronischen Bauelementen auch organische Lichtemitterdioden enthalten kann. Eine Anwendung dieser Anordnung für konzentrische Auflichtbeleuchtungen ist damit jedoch nicht möglich.
Der Erfindung liegt die Aufgabe zugrunde, eine Beleuchtungseinrichtung der eingangs genannten Art zu schaffen, die einen geringen Platzbedarf erfordert und eine hohe Lichtausbeute ermöglicht.

Weiterhin beschreibt die US 2005/0137459 A1 eine medizinische Vorrichtung in Form eines Katheders oder eines Endoskops, welche eine Beleuchtungseinheit mit einer oder mehreren organischen Leuchtdioden aufweist. Die organischen Leuchtdioden sind zur Lichterzeugung bestrombar, wobei das Licht mittels eines Bildsensors oder einer Kamera zur Bilderzeugung von Gewebe innerhalb des Körpers eines Patienten abgestrahlt wird. Dabei leitet ein Wärme leitendes Polymer die Wärme von der Beleuchtungseinheit weg.

Aus der US 2006/0139640 A1 ist eine Dermatoskopie-Epilumineszenz-Vorrichtung mit mehrfarbigen Lichtquellen bekannt.

Erfindungsgemäß wird die Aufgabe mit einer Anordnung, welche die in Anspruch 1 angegebenen Merkmale enthält, gelöst.

Vorteilhafte Ausgestaltungen sind in den Unteransprüchen angegeben.

Bei der erfindungsgemäßen Anordnung ist in der Nähe des Objektivs oder zwischen Einzellinsen des Objektivs ein strukturiertes selbstleuchtendes Element angeordnet, welches teilweise lichtdurchlässig ist.

Es ist vorgesehen, dass das selbstleuchtende strukturierte Element eine Mehrzahl von Lichtquellen enthält, hinter denen in Richtung des Bildaufnehmers gesehen Abdeckungen angebracht sind, die verhindern, dass das von den Lichtquellen ausgesendete Licht in Richtung zum Bildaufnehmer abgestrahlt wird. Das selbstleuchtende Element enthält durchsichtige Bereiche, durch die das abbildende Strahlenbündel hindurch gelangen wird, und undurchsichtige Bereiche, die rückwärts gerichtete Beleuchtungsstrahlen verhindern.

Wenn die hinter den Lichtquellen angebrachten Abdeckungen spiegelnd ausgeführt werden, kann zumindest ein Teil des von den Lichtquellen rückwärtig abgestrahlten Lichtes noch nach vorn gelenkt werden.

Mit der angegebenen koaxialen Auflichtbeleuchtung wird Licht einer zumindest teilweise transparenten Beleuchtungsquelle auf ein abzubildendes Objekt gerichtet, wobei die Beleuchtungsquelle Raum sparend mit einem Objektiv kombiniert werden kann, welches das von der Beleuchtungsquelle ausgeleuchtete Objekt auf einen Bildaufnehmer projiziert.

Dabei verhindern reflektierende oder absorbierende Schichten in der flächenhaften Anordnung ein ungebremstes Abstrahlen des Lichtes zum Bildaufnehmer. Das von der flächenhaften Anordnung ausgeleuchtete Objekt wird vom Objektiv auf den Bildaufnehmer projiziert. Dabei bleibt die gesamte flächenhafte Anordnung im angeschalteten Zustand weitgehend, in der Regel bis zu ca. 75 %, transparent.

Eine Raumfrequenzfilterung wird dadurch ermöglicht, dass ein auf die Objektszene abgestimmtes Muster in der Aperturblende des abbildenden Objektivs platziert wird. Ein klassisches Beispiel dafür ist das Phasenkontrastverfahren in der Mikroskopie. Ordnet man die kleinen Lichtquellen und die hinter ihnen liegenden zumindest teilweise reflektierenden Schichten in dem entsprechenden Muster an, können gezielt Ortsfrequenzanteile der Objektszene eliminiert und damit die Bildauswertung bedeutend erleichtert werden.

Die Erfindung zeichnet sich durch eine Reihe von Vorteilen aus. Hierzu zählen insbesondere:
Die flächenhafte Struktur der Beleuchtungseinheit, die nur wenige mm dick ist, ermöglicht eine raumsparende Anordnung.

Die Dicke ist im Prinzip nur abhängig von den Dicken der Trägerschichten, die aktive Leuchtschicht ist nur wenige µm dick Bei dünnem Trägermaterial sind Gesamtdicken von weniger als 1 mm möglich.

Es werden aktive, durch elektrischen Strom betriebende, Leuchtschichten verwendet.

Das in die Anordnung eingestrahlte Licht wird nicht durch Teilerschichten aufgespaltet und erreicht direkt die auszuleuchtende Objektszene.

Die flächenhafte Struktur ist vorzugsweise planar und damit astigmatismusfrei.

Durch die Möglichkeit, die kleinen Lichtquellen in flächigen Mustern anzuordnen und damit Raumfrequenzfilter als Hardware zu generieren, werden aufwändige Fourier-Transformations-Rechnungen bei der Bildauswertung vermieden.

Die Erfindung wird im Folgenden anhand eines Ausführungsbeispieles näher erläutert.

In den zugehörigen Zeichnungen zeigen:
- Figur 1: eine schematische Darstellung der Gesamtanordnung,
- Figur 2: einen Schnitt durch das selbstleuchtende Element,
- Figur 3: Beispiele für Strukturen von aktiven Leuchtfeldern,
- Figur 4: eine schematische Darstellung der optischen Wirkungen, und
- Figur 5: eine perspektivische Darstellung einer organischen Lichtquelle.

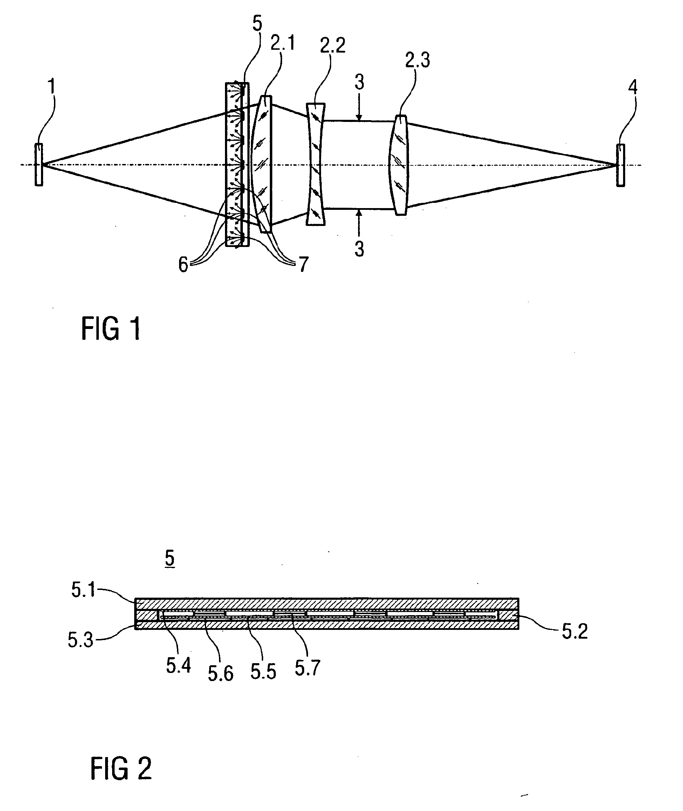

Mit der in **Figur 1** dargestellten koaxialen Auflichtbeleuchtung wird ein abzubildendes Objekt 1 vom abbildenden Objektiv 2 auf den Bildaufnehmer 4 projiziert. Das Objektiv 2 kann aus einer Einzellinse oder aus mehreren Linsen bestehen. In der hier dargestellten Ausführung enthält das Objektiv 2 drei Linsen 2.1, 2.2 und 2.3 sowie die Aperturblende 3. Die Beleuchtung erfolgt mit dem selbstleuchtenden Element 5, das in der Nähe des Objektivs 2 oder zwischen den Einzellinsen des Objektivs 2, beispielsweise am Ort der Aperturblende 3, angeordnet ist. Das selbstleuchtende Element 5 enthält kleine Lichtquellen 6, die auf einem flächenhaften Substrat 5.1 angebracht sind. Die Lichtquellen 6 können in regelmäßiger oder unregelmäßiger Verteilung angeordnet sein und das Objekt 1 monochrom oder polychrom ausleuchten. Eine nur hinter den Lichtquellen 6 aufgebrachte Schicht 7 verhindert, dass direktes Licht unbeeinflusst zum Bildaufnehmer gelangt, sondern vielmehr den Strahlungsfluss zum Objekt 1 erhöht. Als Lichtquellen 6 werden vorzugsweise organische Lichtemitterdioden (OLEDs) verwendet. Die flächenhafte Struktur wird vorzugsweise planar ausgeführt. Für spezielle Anwendungsfälle können aber auch gekrümmte Flächen ausgeführt sein. Wenn die flächenhafte Struktur in der Aperturblende 3 angeordnet wird, wird zusätzlich zur Ausleuchtung der Objektszene 1 durch die in räumlich definierten Mustern aufgebrachte Schicht 7 eine gezielte Beeinflussungen der Pupillenfunktion und damit eine bewusste Raumfrequenzfilterung möglich, die die Bildauswertung hardwaremäßig entscheidend entlastet.

**Figur 2** zeigt einen Schnitt durch ein selbstleuchtendes Element 5. Es enthält eine Anzahl nebeneinander angeordnete Lichtquellen 5.7, die mittels einer oberen transparenten elektrisch leitfähigen Schicht 5.4 und einer unteren transparenten elektrisch leitfähigen Schicht 5.5 angesteuert werden können. Als Lichtquellen sind organische Lichtemitterdioden besonders geeignet. Unterhalb einer jeden Lichtquelle 5.7 befindet sich eine Abdeckung 5.6. Damit wird erreicht, dass die Beleuchtung von hinten nicht zu sehen ist. Die Anordnung ist von einer transparenten Umhausung umgeben, die aus einer oberen Hüllschicht 5.1, einer Verbindungsschicht 5.2 und einer unteren Hüllschicht 5.3 besteht. Das von den Lichtquellen 5.7 ausgehende Licht kann ungehindert nach oben, d. h. in Richtung zum Objekt 1, strahlen. Nach unten können nur Strahlen austreten, die weit nach außen gerichtet sind und nicht in den Abbildungsstrahlengang gelangen. Die Zwischenräume zwischen den einzelnen Lichtquellen 5.7 sind lichtdurchlässig. Das selbstleuchtende Element 5 ermöglicht eine flächenhafte Beleuchtung des Objektes 1, ohne dass sein Licht direkt in den Bildaufnehmer 4 gelangt. Gleichzeitig kann das abbildende Strahlenbündel durch das Element 5 hindurch das Objekt 1 auf den Bildaufnehmer 4 abbilden.

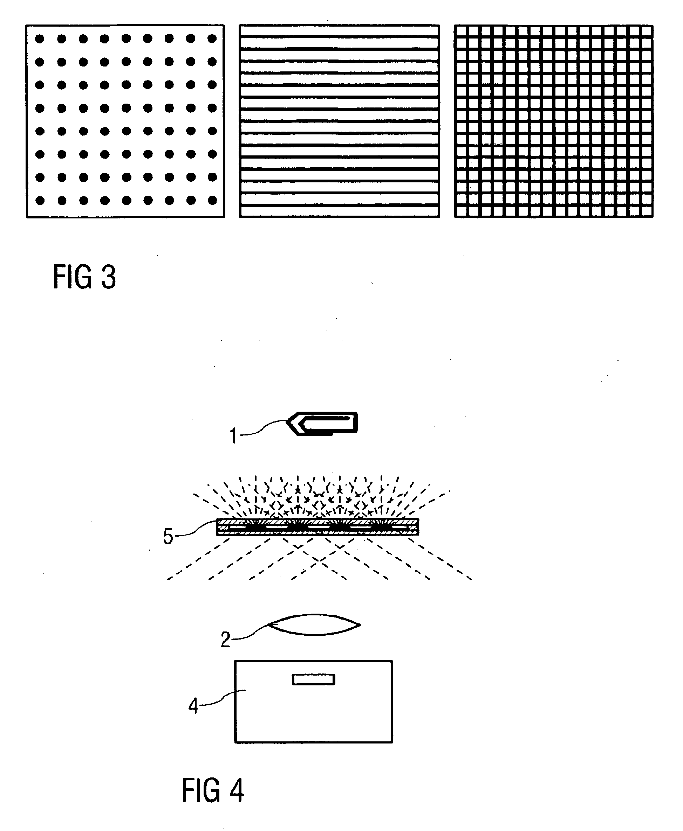

Die im selbstleuchtenden Element 5 erzeugten aktiven Lichtfelder können in beliebigen Formen strukturiert werden. **Figur 3** zeigt Beispiele für mögliche Strukturen, die sich in den oben beschriebenen selbstleuchtenden Elementen 5 als aktive Leuchtfelder herstellen lassen.

Die Lichtverhältnisse der Abbildungsanordnung erläutert **Figur 4****.** Das Objektiv 2 ist auf das Objekt 1 fokussiert und bildet dieses auf den Bildaufnehmer 4 ab. Es befindet sich hinter dem als Lichtquelle dienenden selbstleuchtenden Element 5. Das Objekt 1 wird vom selbstleuchtenden Element 5 beleuchtet, das sich im Unschärfebereich des Objektivs 2 befindet. Es wird vom Beleuchtungsstrahlenbündel des selbstleuchtenden Elementes 5 nicht erfasst, da die Lichtwinkel außerhalb der Objektivapertur liegen.

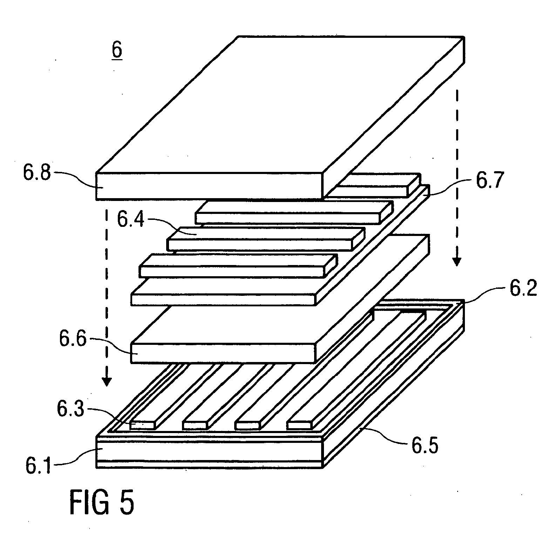

In **Figur 5** ist der Aufbau einer organischen Lichtemitterdiode 6 dargestellt. Mit diesen können Lichtquellen mit sehr geringen Abmessungen erzeugt werden. Im dargestellten Beispiel ist auf einem Glassubstrat 6.1 von 0,7 mm Dicke eine strukturierte ITO-Anode vom 150 nm Schichtdicke aufgetragen. Darüber findet sich eine 120 nm dicke Lochleitungsschicht, auf der eine organische Schicht von 80 nm Dicke angeordnet ist. Es ist auch möglich, Lochleitungsschicht und organische Schicht als gemeinsame Polymerschicht auszuführen. Darüber befindet sich die 240 nm dicke Kathodenschicht und eine Glasabdeckung von 1,1 mm Dicke. Zur Kontraststeigerung kann für spezielle Anwendungen unterhalb des Glassubstrates 6.1 eine zirkular polarisierende Schicht von 0,3 mm Dicke angeordnet sein.

**BEZUGSZEICHENLISTE**

| | | |
|---|---|---|
| 1 | Objekt | |
| 2 | Objektiv | |
| 3 | Aperturblende | |
| 4 | Bildaufnehmer | |
| 5 | Selbstleuchtendes Element | |
| | 5.1 | obere Hüllschicht |
| | 5.2 | Verbindungsschicht |
| | 5.3 | untere Hüllschicht |
| | 5.4 | obere transparente elektrisch leitfähige Schicht |
| | 5.5 | untere transparente elektrisch leitfähige Schicht |
| | 5.6 | Abdeckung |
| | 5.7 | Lichtquelle |
| 6 | organische Lichtemitterdiode | |
| | 6.1 | Glassubstrat |
| | 6.2 | Dichtung |
| | 6.3 | Anode |
| | 6.4 | Kathode |
| | 6.5 | Polarisator |
| | 6.6 | Lochleitungsschicht |
| | 6.7 | Organische Schicht |
| | 6.8 | Glasabdeckung |
| 7 | reflektierende oder absorbierende Schicht | |

## Patentansprüche

1. Koaxiale Auflichtbeleuchtung, bei der Licht einer Beleuchtungseinrichtung auf ein abzubildendes Objekt (1) gerichtet wird, wobei das von der Beleuchtungseinrichtung ausgeleuchtete Objekt (1) mit einem Objektiv (2) auf einen Bildaufnehmer (4) projiziert wird, wobei in der Nähe des Objektivs (2) ein strukturiertes selbst leuchtendes Element (5) angeordnet ist, welches teilweise lichtdurchlässig ist, wobei das selbst Leuchtende strukturierte Element (5) eine Mehrzahl von Lichtquellen (6) enthält, wobei als Lichtquellen (6) organische Lichtemitterdioden verwendet werden, die jeweils ein Substrat enthalten, auf dem eine erste Elektrode (6.3) und eine zweite Elektrode (6.4) angebracht sind, zwischen denen sich eine organische Schicht (6.7) befindet, **dadurch gekennzeichnet, dass** lichtundurchlässige Abdeckungen (5.6) hinter der Mehrzahl von Lichtquellen (6) in Richtung des Bildaufnehmers (4) angebracht sind, so dass das selbst leuchtende Element (5) undurchsichtige Bereiche enthält, wobei das selbst leuchtende strukturierte Element (5) in der Nähe des Objektivs (2), zwischen dem Objekt (1) und dem Bildaufnehmer (4), entlang dem abbildenden Strahlenbündel angeordnet ist und das selbst leuchtende Element (5) durchsichtige Bereiche enthält, durch die das Strahlenbündel zum Bildaufnehmer (4) gelangt.

2. Koaxiale Auflichtbeleuchtung nach Anspruch 1, **dadurch gekennzeichnet, dass** das strukturierte selbst leuchtende Element (5), zwischen Einzellinsen (2.1, 2.2, 2.3) des Objektivs (2) angeordnet ist.

3. Koaxiale Auflichtbeleuchtung nach Anspruch 1 oder 2, **dadurch gekennzeichnet, dass** die Breite der hinter den Lichtquellen (6) angebrachten Abdeckungen (5.6) mindestens der Breite der Lichtquellen (6) entspricht.

4. Koaxiale Auflichtbeleuchtung nach einem der vorhergehenden Ansprüche, **dadurch gekennzeichnet, dass** die Abdeckungen (5.6) in Richtung zum Objekt (1) spiegelnd oder schwarz ausgeführt sind.

5. Koaxiale Auflichtbeleuchtung nach einem der vorhergehenden Ansprüche, **dadurch gekennzeichnet, dass** das selbstleuchtende strukturierte Element (5) in der Ebene der Aperturblende (3) des Objektivs (2) angeordnet ist.

## Claims

1. Coaxial reflected-light illumination in which the light of an illumination device is directed onto an object (1) to be imaged, the object (1) illuminated by the illumination device being projected with the aid of an objective (2) onto an imaging device (4), there being arranged in the vicinity of the objective (2) a structured self-luminous element (5) which is partially light-transmitting, the self-luminous structured element (5) including a plurality of light sources (6), use being made as light sources (6) of organic light-emitting diodes which respectively include a substrate on which there are mounted a first electrode (6.3) and a second electrode (6.4) between which an organic layer (6.7) is located, **characterized in that** non-light-transmitting covers (5.6) are fitted downstream of the plurality of light sources (6) in the direction of the imaging device (4) such that the self-luminous element (5) includes opaque areas, the self-luminous structured element (5) being arranged in the vicinity of the objective (2), between the object (1) and the imaging device (4), along the imaging beam, and the self-luminous element (5) includes transparent areas through which the beam reaches the imaging device (4).

2. Coaxial reflected-light illumination according to Claim 1, **characterized in that** the structured self-luminous element (5) is arranged between individual lenses (2.1, 2.2, 2.3) of the objective (2).

3. Coaxial reflected-light illumination according to Claim 1 or 2, **characterized in that** the width of the covers (5.6) fitted downstream of the light sources (6) corresponds at least to the width of the light sources (6).

4. Coaxial reflected-light illumination according to one of the preceding claims, **characterized in that** the covers (5.6) are designed to be specular or black in the direction of the object (1).

5. Coaxial reflected-light illumination according to one of the preceding claims, **characterized in that** the self-luminous structured element (5) is arranged in the plane of the aperture stop (3) of the objective (2).

## Revendications

1. Eclairage coaxial dans lequel la lumière d'un dispositif d'éclairage est orientée sur un objet (1) dont l'image doit être formée,
l'objet (1) éclairé par le dispositif d'éclairage étant projeté à l'aide d'un objectif (2) sur un récepteur d'image (4),
un élément structuré auto-éclairant (5) étant disposé à proximité de l'objectif (2) et étant au moins partiellement transparent,
l'élément structuré auto-éclairant (5) contenant plusieurs sources de lumière (6), les sources de lumière (6) utilisées étant des diodes luminescentes organiques qui contiennent chacune un substrat sur lequel sont placées une première électrode (6.3) et une deuxième électrode (6.4) avec entre elles une couche organique (6.7),
**caractérisé en ce que**
des recouvrements non transparents (5.6) sont placés derrière les différentes sources de lumière (6) en direction du récepteur d'image (4) de telle sorte que l'élément auto-éclairant (5) contienne des parties non transparentes,
**en ce que** l'élément structuré auto-éclairant (5) est disposé à proximité de l'objectif (2) entre l'objet (1) et le récepteur d'image (4) le long du faisceau de projection de formation d'image et
**en ce que** l'élément auto-éclairant (5) contient des parties transparentes par lesquelles le faisceau d'éclairage aboutit sur le récepteur d'image (4).

2. Eclairage coaxial selon la revendication 1, **caractérisé en ce que** l'élément structuré auto-éclairant (5) est disposé entre des lentilles individuelles (2.1, 2.2, 2.3) de l'objectif (2).

3. Eclairage coaxial selon les revendications 1 ou 2, **caractérisé en ce que** la largeur des recouvrements (5.6) placés derrière les sources de lumière (6) correspond au moins à la largeur des sources de lumière (6).

4. Eclairage coaxial selon l'une des revendications précédentes, **caractérisé en ce que** les recouvrements (5.6) sont réfléchissants ou noirs en direction de l'objet (1).

5. Eclairage coaxial selon l'une des revendications précédentes, **caractérisé en ce que** l'élément structuré auto-éclairant (5) est disposé dans le plan du diaphragme (3) de l'objectif (2).
